# EUROPEAN PATENT SPECIFICATION

(11) **EP 3 320 786 B1**
(45) Date of publication and mention of the grant of the patent: **12.06.2019**
(21) Application number: 17201561.2
(22) Date of filing: 14.11.2017
(51) Int. Cl.: A23L 33/14, A23K 10/16, A23K 20/147, A23K 20/163, A23K 50/10, A23K 50/60, A23L 33/19, A23L 33/21

(54) **FOOD COMPOSITIONS, THEIR USES AND PROCESS FOR THEIR PREPARATION**
NAHRUNGSMITTELZUSAMMENSETZUNGEN,VERWENDUNG UND HERSTELLUNGSVERFAHREN
COMPOSITION ALIMENTAIRE, UTILISATION ET PROCEDE DE PREPARATION

(30) Priority: 15.11.2016 IT 201600115007
(43) Date of publication of application: 16.05.2018
(73) Proprietor: Frabes S.p.A., 25038 Rovato (BS) (IT)
(72) Inventor: Bonassi, Renato, 25038 Rovato (IT)
(74) Representative: Di Giovine, Paolo

(56) References cited:
- WO-A1-2009/070291
- WO-A2-2004/017979
- DE-A1-102014 104 335
- JP-A- 2015 188 415
- US-A- 5 756 132
- US-A- 6 156 333
- US-A1- 2007 009 502
- US-A1- 2010 303 966
- A.J. HEINRICHS ET AL: "Effects of Mannan Oligosaccharide or Antibiotics in Neonatal Diets on Health and Growth of Dairy Calves", JOURNAL OF DAIRY SCIENCE., vol. 86, no. 12, 1 December 2003 (2003-12-01), pages 4064-4069, XP055373822, US ISSN: 0022-0302, DOI: 10.3168/jds.S0022-0302(03)74018-1
- CAGDAS KARA ET AL: "Effects of Supplemental Mannanoligosaccharides on Growth Performance, Faecal Characteristics and Health in Dairy Calves", ASIAN-AUSTRALASIAN JOURNAL OF ANIMAL SCIENCES., vol. 28, no. 11, 1 November 2015 (2015-11-01), pages 1599-1605, XP055373817, KR ISSN: 1011-2367, DOI: 10.5713/ajas.15.0124
- TERRE ET AL: "Effects of mannan oligosaccharides on performance and microorganism fecal counts of calves following an enhanced-growth feeding program", ANIMAL FEED SCIENCE AND TECHNOLOGY, ELSEVIER, AMSTERDAM, NL, vol. 137, no. 1-2, 19 July 2007 (2007-07-19), pages 115-125, XP022157534, ISSN: 0377-8401, DOI: 10.1016/J.ANIFEEDSCI.2006.11.009

## Description

### TECHNICAL FIELD OF THE INVENTION

The present invention relates to food compositions, in particular for use as food supplement replacing milk for farmed and domestic animals, comprising galacto-oligosaccharides brewer's yeast containing Mannan-oligosaccharides and Fructooligosaccharides, preferably even a whey protein concentrate. The present invention also relates to the processes for the preparation of such compositions.

### STATE OF PRIOR ART

Consequences linked to the use of antibiotics and existing legislation for the use of antibiotics in farming: the antibiotics in the veterinary field, since the '50s, represent fundamental means for controlling the infective diseases in this field. The introduction thereof contributed in improving the animal health and it represents important means for guaranteeing the standard in the productions of animal origin feed. Seventy years later, these applications are questioned due to the appearance of the antibiotic-resistance phenomenon.

Currently several categories of antimicrobial drugs are available for the animals, with several pharmaceutical forms and administration routes, such as bolus, *drench,* in the feed, in water, injection, intramammary, pessary and topic. The different available categories include, just to mention some of them, aminoglycosides, cephalosporins, (fluorinated)quinolones, macrolides, penicillin, amphenicols, pleuromutilines, polypeptides, ionophores, sulphonamides, tetracyclines.

With the emergence of concerns about the resistance to antimicrobial drugs both in man and in the animals, in 1999 it was decided to prohibit some antibiotic growth promoters in the animal productions. The products which were prohibited were those which included antimicrobial drugs belonging to classes of drugs used even in the treatment of human infections. The European Union prohibited the use of the remaining antimicrobial drugs used as growth promoters starting from 1st January 2006 (reg. 1831/2003).

In practice, such restriction, however, resulted to be a partial failure in terms of amount of used antibiotics and exactly for this the UE adopted more and more restrictive measures with the purpose of minimize the use thereof even for the therapeutic purposes.

Alternative strategies to the use of the antibiotics in farming: as far as the preventive measures are concerned, the producers are now obliged to identify alternative approaches to optimize the health of the animals and the prevention of diseases.

Some of these options include the improvement of the vaccination protocols, the administration of colostrum of good quality/quantity within the first 12 hours of life, adequate food or a milk good substitute or pasteurised milk, and the improvement of the general conditions of the animals and of farming. Moreover, interesting alternatives can be represented by the use of additives such as the probiotic substances, prebiotic substances, plant essences and essential oils in nursing.

In the young mammals, the probiotic drugs, such as the lactic bacteria (LAB) or some Bacillus species represent interesting means for stabilizing the intestinal microbiota and for reducing the risk of unwished colonizations by pathogens. The LABs are well known and used for the young mammals and they can act through different mechanisms. The administration of lactobacilli and bifidi in the young mammals in the first days of life could facilitate a correct colonization to the detriment of pathogen bacteria by balancing and stabilizing the animal microbiota. Moreover, a stable microbial charge of species belonging to the Lactobacillus genus was demonstrated to be correlated to the improvement of the grow performance and immunocompetence in young mammals. However, the effectiveness of probiotics has not been demonstrated in several situations and the data are conflicting therebetween (*Uyeno et al. 2015*). For this reason, it is believed that additional studies are required to prove the effectiveness thereof in farming.

A second possible alternative is represented by the administration of prebiotics which are complex oligosaccharides able to modulate the microbiota composition by favouring some bacterial species and disadvantaging others. On the contrary, these oligosaccharides, not metabolized by the host, are used in the intestine by some specific bacterial group which thus are favoured. However, even for this class of prebiotics the information about their possible use in feeding the young mammals are poor.

US5756132 discloses a milk replacer for calves containing whey protein concentrate.

US2007/009502 teaches the use of galactooligosaccharides in an amount of 0.01-10% in calves feed.

Then the problem of providing new compositions and processes for their preparation, not having the disadvantages of the solutions described in the prior art, is much felt.

### SUMMARY OF THE INVENTION

The present invention is based upon the use in compositions for food use of a mixture of galacto-oligosaccharides (GOS) brewer's yeast containing Mannan-oligosaccharides (MOS) and Fructooligosaccharides (FOS) and preferably even a whey protein concentrate (WPC). The present invention further relates to the uses of such compositions and to a new process for their preparation according to what herein described and claimed. The inventors of the mixture development have identified the problem of the not complete inclusion of GOS MOS and FOS which lead to a separation of the prebiotics from the matrix, by altering the mode for ingesting the prebiotics themselves, by determining a possible poor effectiveness thereof. The process developed by the inventors allows to include integrally with the raw materials the required prebiotics. This inclusion represents one of the new factors of the product which improves the effectiveness in the administration of the additives added to milk.

Moreover, the product preparation would result, for the breeder, much easier and more practical by avoiding errors which could reduce the administration effects.

One of the application fields of the herein compositions is a milk replacer in feeding the young mammals and as integrator for preventing the common pathologies of the young mammals in the first period of life. The invention further has several advantages among which:
- reduction in using antibiotics with particular reference to the weaning phase;
- improvement in the intestinal microbial ecology and of the animal physiology;
- reduction in the incidence of pathogenic bacteria, of intestinal colonization;
- increase in the animal weight;
- increase in the milk production and quality;
- reduction in the methane production;
- reduction in the antibiotic-resistance phenomena;

Other advantages and features and use modes of the present invention will result evident from the following detailed description of some embodiments, shown by way of example and not for limitative purposes.

### BRIEF DESCRIPTION OF FIGURES

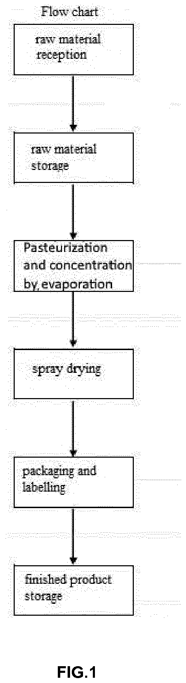

Figure 1: figure 1 represents schematically the flow chart of an embodiment of the process according to the present invention.
Figure 2: figure 2 shows the curves with the data of temperature, concentration of dry substance and °Brix (/10) during the concentration phase of the process according to a preferred embodiment.

### DETAILED DESCRIPTION OF THE INVENTION

The present invention relates to compositions for food use, in particular for use as food supplements and milk replacers for farming animals such as bovines and pigs or domestic animals, such as dogs and cats. Such compositions include a galacto-oligosaccharide and brewer's yeast containing Mannan-oligosaccharides and Fructooligosaccharides, preferably they will include even whey protein concentrate herein identified also as WPC.

In the present description under the term *whey protein concentrate or WPC* a whey protein concentrate is meant, in particular a concentrate of immunoglobulins/gamma-globulins. WPC is characterized by highly digestible proteins and by the high biological value (serum-albumin, β-lactoglobulin, α-lactoalbumins, lactoferrins) and by a significant presence of immunoglobulins, useful for the natural development of the immunitary system of the animal. WPC could have a protein/dry weight ratio of the concentrate between 30 and 40%, preferably of about 35%. WPC to be used in the composition could be purchased or obtained according to procedures known to the person skilled in the art. Preferably liquid WPC obtained by ultrafiltration of bovine serum will be used.

The Galacto-oligosaccharides, in the present description even designated GOS in short, are a product derived from the whey permeate, in its prebiotic function promote the development, at intestinal level, of different microbial strains (Bifidobacterium lactis DR10 and Lactobacillus rhamnosus DR20). Such strains have the natural capability of inhibiting the development of unwished bacteria at the level of the gastrointestinal tract. Another property of the galacto-oligosaccharides is that of reducing the adhesion of the pathogenic microorganisms to the intestinal wall. Due to the molecular configuration, the oligosaccharides are similar to intestinal fimbriae: the microorganisms therefore link to the molecule of the oligosaccharide and not to the intestinal wall, consequently being expelled by the faecal transit. Analogously to mannano-oligosaccharides (MOS) and fruttooligosaccharides (FOS), the GOS fermentation at intestinal level leas to the formation of volatile fat acids, which stimulate the development of the intestinal villi and favour the absorption of the nutrients.

MOS: Mannano-Oligosaccharides - known for their function of trapping the bacteria, increase the development of the intestinal villi, have anti-oxidizing activity (content in peptides and glutathione).

The brewer's yeast (Saccharomyces cerevisiae), apart from the high supply of proteins and vitamins of group B, characterizes for the presence of mannano-oligosaccharides (MOS) and Fructooligosaccharides (FOS). The oligosaccharides are a class of carbohydrates which are not digested at the level of the small intestine, thus by reaching unaltered the large intestine. At the colon level, the oligosaccharides are subjected to a quick process of fermentation due to the intestinal microflora, by favouring the development of such microorganisms to the detriment of the harmful and/or pathogenic microorganisms. The fermentation of the oligosaccharides further leads to the formation of volatile fatty acids (VFA), important for the effectiveness of the energy absorption and for a correct morphological development of the intestine.

The brewer's yeast also includes glutathione, molecule having antioxidant natural properties useful in the prevention of the infections.

The compositions could include 70% and 80% by weight of whey protein concentrate and/or between 5% and 15% by weight of galacto-oligosaccharides and/or between 10 and 20% by weight of brewer's yeast, wherein the percentage designates the weight of dry substance per 100 grams of total composition.

The herein described compositions represent a new solution for supplementing the animal nutrition, with particular reference to the weaning period. They could be used in several application fields for example, in the animal nutrition in the first phase for weaning animals from livestock or farming, with particular reference to the following species: calves, pigs, lambs, buffalos, or domestic animals: dogs, cats or chickens and other bird species of interest for the human nutrition. The product administration allows to balance the intestinal flora and to activate the immune response at gastrointestinal level thus resulting also useful for use in the prevention or treatment of neonatal enteritis.

The process for the preparation of the herein described compositions comprises the following steps:
a) preparing a liquid mixture of galacto-oligosaccharides, whey protein concentrate and brewer's yeast containing Mannan-oligosaccharides and Fructooligosaccharides;
b) pasteurizing the mixture prepared in step a);
c) concentrating the mixture pasteurized in step b);
d) drying the concentrate of step c) by means of *spray drying.*

During the process, preferably in step a) for preparing the mixture, additional substances (additives) could be added such as for example alkalizing and/or antifoam substance, such as for example 10% sodium hydroxide solution as substance alkalinizing/stabilizing the pH to bring the pH of the mixture between 6.10 and 6.50 and glycerine polyethylene glycol ricinoleate E484 as emulsifying/antifoam agent and/or other substances suitable to stabilize or improve the properties of the mixture known to the person skilled in the art.

According to an embodiment the pasteurization step b) will be performed in a plate heat exchanger until a temperature of at least 72°C, preferably with a flow rate of about 9000 l/h. Once reached the temperature, the product passes through a tube which guarantees a minimum dwell time for performing the procedure in an optimum way, for example at least 15 seconds.

According to an embodiment the concentration step c) will be performed in a tube bundle concentrator. Such concentration step takes place in a relative vacuum state set for example at a pressure of -0,93/-0,95 mBar. The pressure deprivation inside the effects allows to extract the water existing in the product at temperatures much lower than 100°C, in this way allowing not to alter the features of the product and to avoid incrustations on the tube bundles which cause ineffectiveness in the thermal exchange between the tubes and the steam jacket outside the same. The concentration step allows to obtain at least double dry weight of the starting mixture.

The concentration step will be advantageously followed by a filtration step, preferably a first filtration with 100 µm filters and then a second filtration with 50 µm filters will be provided. According to an embodiment such filters will be made of cloth. The filtrations could be followed by a an additional step for homogenizing the product before the drying step.

According to an embodiment the step d) of *spray drying* is performed at a pressure of about 300 bar preferably through conical tip nozzles.

By means of a diffusor in equicurrent, the concentrated product is hit by hot air streams at a temperature of about 170/200°C.

At the end of the step of *spray drying* the powder product appears with a content of dry substance ranging between 95% and 97% and a temperature of about 55-56°C.

The powder product will be conveniently cooled down, for example with a system of air/ice cold water exchange system until a temperature of about 40/42°C and then conveyed in the containers for storage.

### EXAMPLES

### Process for the preparation of the composition

### 1. RECEPTION OF RAW MATERIALS AND STORAGE

The raw materials involved in the production of WPS are managed as shown by the guidelines existing in the dedicated procedure.

Once accepted and discharged, the three raw materials (WPC 35, Brewer's yeast and GOS) are stored in dedicated spaces and identified with a univocal inner batch.

The bulk received products (WPC 35 and Brewer's yeast) are stored in thermally insulated tanks made of steel kept at a temperature of about 6°C, whereas GOS, received in IBC, is stored in warehouse at room temperature.

The three products are worked within maximum 48 hours, so as to guarantee the product freshness and to avoid organolectic alterations and of the nutrients due to the bacterial charge existing naturally inside thereof.

### 2. MIXING OF RAW MATERIALS

The three raw materials involved in the production of WPS are mixed therebetween inside thermally insulated tanks according to the formula developed to guarantee the right supply of all nutritional components included in the product:

| Raw material | Used percentage (on the dry substance weight) |
|---|---|
| WPC 35 | 76 |
| Brewer's yeast | 14 |
| GOS | 10 |

The three mixed raw materials are then conveyed inside an equalization tank, wherein the homogenization of the mixture and the additivation of the technological adjuvants (0,03 - 0,05% of antifoam glycerine polyethylene glycol ricinoleate E484 and if required a solution of NaOH al 10% to bring the pH of the mixture inside the optimum range for the operation of the concentration step (6.10-6.50)) take place.

The two mixing steps have a duration of about 2/3 hours depending upon the product volume to be worked, and it guarantees the perfect homogeneity of the liquid half-finished product which will be transformed into powder WPS.

### 3. PASTEURIZATION AND EVAPORATIVE CONCENTRATION

The mixture of liquid WPS has a dry matter content around 22/24%, this depending upon the raw material included in the starting raw materials.

The pasteurization step substantially has 3 purposes:
- to inactivate the cells of *Saccharomyces Cerevisiae;*
- to inactivate the microorganisms naturally present in the dairy products (mainly Enterobacteria);
- to free the nutrients existing in the Brewer's yeast (MOS, FOS, vitamins of the group B, phosphorous, cell walls);

The pasteurization takes place by heating the mixture in a plate heat exchanger until a temperature of 72°C, with a flow rate of about 9000 l/h; once reached such temperature, the product passes through a tube which guarantees the minimum dwell time to guarantee the correct execution of the procedure (minimum 15 seconds).

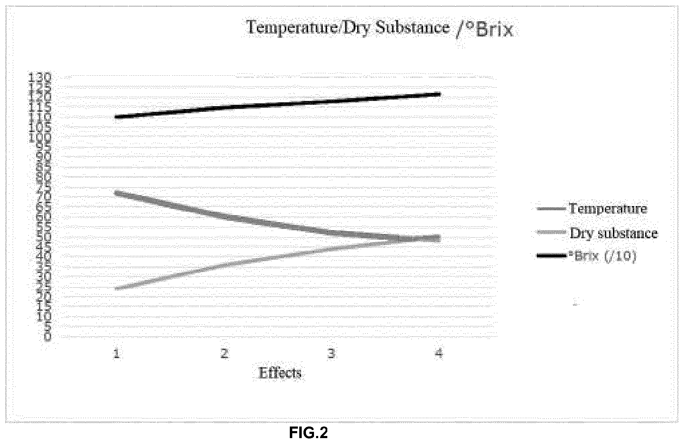

After the pasteurization the product flows into the first one of four effects of tube bundle concentrator. Inside the four concentrator effects the product passes from a dry matter content of 22/24% to a content of 48/52%. The content of dry substance and of sugar concentration (°Brix) are expressed through the following table and the curves shown in figure 2.

| Effect | Temperature °C | Dry substance % | Brix |
|---|---|---|---|
| 1 | 72 | 24 | 1100 |
| 2 | 60 | 36 | 1150 |
| 3 | 52 | 44 | 1180 |
| 4 | 48 | 50 | 1215 |

The concentration takes place in a relative vacuum state set at a pressure of -0,93/-0,95 mBar. The pressure deprivation inside the effects allows to extract the water existing in the product at temperatures much lower than 100°C, in this way allowing not to alter the features of the product and to avoid incrustations on the tube bundles which cause ineffectiveness in the thermal exchange between the tubes and the steam jacket outside the same.

At the end of the concentration step the half-finished product is cooled down by means of the tube bundle condensers and then brought at a temperature lower than 10°C, so as:
- to guarantee the preservation of the half-finished product until the spraying step;
- to allow a first crystallisation of sugars, fundamental feature for the effectiveness of the spray drying step;
- to keep the product machinable and transportable through the plant tubes (at a lower temperature the product would be too dense to be able to be moved).

### 4. FILTERING AND SPRAY DRYING

The concentrated half-finished, before the spray drying, is filtered so as to remove rough and/or burnt particles which could obstruct high pressure pumps and nozzles.

The filtration of the concentrated half-finished product takes place in two separate steps before inletting the gate-dryers.

The first filtration step takes place at low pressure through the filters made of cloth with size of 100 micron. This size was selected as it is able to keep the bigger particles without keeping the sugar crystals and the less soluble components included in the brewer's yeast.

After the first filtration step, the product is conveyed in two tanks for serving the gate-dryers Tecoma with volume of about 800 liters.

Before the second filtration step, the product is pushed through a homogenizing pump with pistons which reduces the size of the sugar crystals by guaranteeing at the same time the perfect homogeneity of the mixture put into the spraying chambers. At this point the concentrated half-finished product reaches a pressure of about 300 bar and is pushed through filters preferably made of cloth with size of 50 micron: this step is useful to separate the the upper particles at the set size, which could not dry perfectly and/or burn. Even the size of this filter was decided based upon the product features.

The filters are removed, cleaned and checked at hour intervals. The half-finished product is then sprayed inside the horizontal spraying chambers at a pressure of about 300 bar through the conical point nozzles dedicated to the production of WPS.

By means of a diffusor in equicurrent, the half-finished product is hit by hot air streams at a temperature of about 170/200°C (the temperature is adjusted based upon outer temperature and humidity, the starting dry substance of the half-finished product, the outgoing temperature conditions of the product).

In the spraying chamber, the dehydration flash lasts between 4 and 20 milliseconds, and the outgoing powder product has a dry substance content comprised between 95% and 97% and a temperature of about 55-56°C.

Conveyed by means of pneumatic transportation, the powder product is cooled down with a system of air/ice cold water exchange until a temperature of about 40/42°C and then conveyed in flexible containers (big-bags).

### 5. Experimental tests for using the compositions according to the present invention in feeding calves of Frisona race during weaning

### 5.1 Test goals:

- to check the effect that the administration of FOS and MOS prebiotics included in the brewer's yeast, added to a milk replacer, can have on the growth performances and on the health status of the calves in the weaning step;
- to check the effect that the administration of GOS prebiotics, added to a milk replacer, can have on the growth performances ad on the health status of the calves in the weaning step;
- to check the effect that the administration of a milk replacer including WPS (raw material obtained from the atomization of WPC, GOS and Brewer's yeast) can have on the growth performances and on the health status of the calves in the weaning step;
- to check that the administration of a milk replacer including Yeast-GOS (raw material obtained from the atomization of GOS and Brewer's yeast) can have on the growth performances and on the health status of the calves in the weaning step.

### 5.2 Test protocol

### 5.2.1 Test subjects

Within the project two tests were performed at the same time. 8 different groups were created based upon the different use of Milk Replacer:
1) BREWER'S YEAST GROUP (A): fed with Milk Replacer (conventional milk replacer) based upon serumproteins from WPC with addition of liquid brewer's yeast at time of preparing the meal;
2) GOS GROUP (B): fed with Milk Replacer (conventional milk replacer) based upon serumproteins from WPC with addition of liquid galacto-oligosaccharides at time of preparing the meal;
3) WPS GROUP (C): fed with Milk Replacer (alternative milk replacer) based upon serumproteins from WPC with an inclusion of WPS by 15% as replacement of 15% of WPC.
4) CONTROL GROUP (D): fed with Milk Replacer (milk replacer) conventional product based upon serumproteins from WPC;
5) YEAST GROUP (A1): fed with Milk Replacer (conventional milk replacer, including 50% of low-fat milk) with addition of liquid yeast at time of preparing the meal;
6) GOS GROUP (B1): fed with Milk Replacer (conventional milk replacer, including 50% of low-fat milk) with addition of liquid galacto-oligosaccharides at time of preparing the meal;
7) YEAST- GOS GROUP (C1): fed with Milk Replacer (conventional milk replacer, including 50% of low-fat milk) with an inclusion of Yeast-GOS (2.5%);
8) CONTROL GROUP (D1): fed with Milk Replacer (milk replacer) low-fat milk-based (50%) conventional product.

After birth and colostrum step (equal for all test animals), the calves received iso-energetic and isoproteic diets able to satisfy the growth requirements and they were followed up to 10 days after weaning performed after 70 days after birth.

### 5.2.2 Houses

The calves were bred in single boxes until the end of weaning. This allowed to manage better the treatments, the sampling and the single subject was considered as experimental unit during the whole test.

The single boxes intended to the calves are hut-like structures made of fibreglass with roofing made of fibre cement. Structures on the ground with straw litter were used, regularly replaced and folded over (twice/week).

The single boxes wherein the calves were bred until the weaning moment have the following sizes: 160 cm (length), 100 cm (width), 80 cm (height).

The calf-barn is positioned outside, therefore a particular attention was given to the environmental check, by guaranteeing the presence of wind-break nets and cloths for shadowing.

Moreover, the calf-barn is in an insulated area of farming so that it is far from possible visitors and to avoid any contact with other animal species, which could cause the beginning of pathologies.

For the 10 days subsequent weaning the animals were kept under constant monitoring. To this purpose they were grouped in distinct boxes.

The collective boxes wherein the calves were group in the post-weaning step provide:
- 1,7 m2 of space/calf;
- floor covering equipped with grid, anti-slip to avoid podal injuries.

### 5.2.3 Food

Each Milk Replacer was administered to 10 calves in each single test until the weaning period (about 70 days from birth) for a total of 80 calves in test.

Each Milk Replacer was prepared with respect of:
- volumes and concentrations (150 gr of powder/It of water); verified with the use of refractometer Brix (scale 0-30);
- preparation temperatures minimum 45° and not higher than 65° (the thermometer was used)
- mixing time not lower than 2 minutes (performed with mixers).

The Milk Replacer is distributed in buckets (one for each single box) characterized by a rubber nipple at the base. Fresh and clean water always available.

### 5.2.4 Data detection

At the moment of birth and at the moment of weaning (70 days), the calves were weighed. The health status of the animals was further monitored as far as the diarrheal phenomena and the meal refusal percentage are concerned.

The following scheme shows a schematization of the tests which were performed, the calves used in the different experimental periods and the performed measurements.

| Animals | 40 males of Frisona race, ristalled after 4/7 days of life |
|---|---|
| Groups | GROUP A (group Brewer's yeast): 10 animals (housed singularly) |
| | GROUP B (group GOS): 10 animals (housed singularly) |
| | GROUP C (group WPS): 10 animals (housed singularly) |
| | GROUP D (control group): 10 animals (housed singularly) |
| Test duration | 10 weeks |
| Method for including additives | Yeast: added at time of reconstituting milk in liquid form |
| | GOS: added at time of reconstituting milk in liquid form |
| | WPS: inserted in formulation of the milk replacer |
| Measurements | Body weight, percentage of animals with dysentery, percentage of refusal of meals |
| Groups | GROUP A1 (group Brewer's yeast): 10 animals (housed singularly) |
| | GROUP B1 (group GOS): 10 animals (housed singularly) |
| | GROUP C1 (group YEAST- GOS): 10 animals (housed singularly) |
| | GROUP D1 (control group) : 10 animals (housed singularly) |
| Test duration | 10 weeks |
| Method for including additives | Yeast: added at time of reconstituting milk in liquid form |
| | GOS: added at time of reconstituting milk in liquid form |
| | YEAST-GOS: inserted in formulation of the Milk Replacer |
| Measurements | Body weight, percentage of animals with dysentery, percentage of refusal of meals |

### 5.2.5 Nutritional programme (for groups A, B, C, D, A1, B1, C1, D1 *)

| WEEK | DAY | MEAL/DAY | MILK REPLACER/MEAL | LT/MEAL | STARTER FEED | WATER |
|---|---|---|---|---|---|---|
| 1 | From 4 to 7 | 2 | 300 | 2 | Yes | AVAILABLE |
| 2 | | 2 | 300 | 2 | Yes | AVAILABLE |
| 3 | | 2 | 375 | 2.5 | Yes | AVAILABLE |
| 4 | | 2 | 450 | 3 | Yes | AVAILABLE |
| 5 | | 2 | 600 | 4 | Yes | AVAILABLE |
| 6 | | 2 | 600 | 4 | Yes | AVAILABLE |
| 7 | | 2 | 450 | 3 | Yes | AVAILABLE |
| 8 | | 2 | 375 | 2,5 | Yes | AVAILABLE |
| 9 | | 2 | 300 | 2 | Yes | AVAILABLE |
| 10 | | 1 | 300 | 2 | Yes | AVAILABLE |

| | | | | | | |
|---|---|---|---|---|---|---|
| *All animals subjected to test received colostrum | | | | | | |

### 5.2.6 Material and methods

The Brewer's yeast (in liquid form) was provided to group A in combination with the same conventional milk replacer based upon serum proteins, including WPC.

"The brewer's yeast" is the concentrated yeast (40%ss), of the botanical classification Saccharomyces cerevisiae, resulting as a by-product from the beer production. Sufficient brewer's yeast was used to reach a concentration of 2% in finished food (milk replacement), the inclusion percentage was so as to provide 12 to 24 grams of brewer's yeast, per calf a day. The continuous mixing was performed until the product made homogeneous was distributed immediately after mixing to animals.

The group B (GOS group) was fed with the same milk replacer based upon serum proteins (including WPC) with addition of GOS in liquid form.

"GOS" are concentrated galacto-oligosaccharides (40% ss) produced starting from enzymatic reactions at the expense of lactose. Sufficient GOS was used to be able to reach a concentration of 1.5% of GOS in the finished food, the inclusion percentage is so as to provide 9 to 18 grams of GOS, per calf a day. The continuous mixing was performed until the product made homogeneous was distributed immediately after mixing to animals.

The group C (WPS group) was fed with a Milk Replacer wherein 15% of WPC was replaced by 15% of WPS (raw material obtained from the atomization of WPC, GOS and Brewer's yeast), which leads to have a concentration of 1.5% of GOS and of 2% of brewer's yeast in the finished food, the inclusion percentage is so as to provide 9 to 18 grams of GOS and from 12 to 24 grams of brewer's yeast, per calf a day. The continuous mixing was performed until the product made homogeneous was distributed immediately after mixing to animals.

The group D (control group) is fed with a conventional milk replacer based upon serum proteins, including WPC. The continuous mixing was performed until the product made homogeneous was distributed immediately after mixing to animals.

The second group of animals was fed with a Milk Replacer including 50% of low-fat milk, which does not provide nor provides to include 15% of WPC; therefore, a raw material in powder was implemented constituted by yeast and GOS, which supplies the required prebiotics.

"The brewer's yeast" is the concentrated yeast (40%ss), of the botanical classification Saccharomyces cerevisiae, resulting as a by-product from the beer production. Sufficient brewer's yeast was used to reach a concentration of 2% in the finished food (milk replacer), the inclusion percentage is so as to provide 12 to 24 grams of brewer's yeast, per calf a day. The continuous mixing was performed until the product made homogeneous was distributed immediately after mixing to animals.

"GOS" are concentrated galacto-oligosaccharides (40% ss) produced starting from enzymatic reactions at the expense of lactose. Sufficient GOS was used to be able to reach a concentration of 0.5% of GOS in the finished food, the inclusion percentage is so as to provide 3 to 6 grams of GOS, per calf a day. The continuous mixing was performed until the product made homogeneous was distributed immediately after mixing to animals.

The group C1 (Yeast-GOS group) is fed with a Milk Replacer wherein apart from 50% of low-fat milk there is also 2.5% of Yeast-GOS, obtained by atomization of GOS and brewer's yeast, which leads to have a concentration of 2% of brewer's yeast and of 0.5% of GOS in the finished food, the inclusion percentage is so as to provide 3 to 6 grams of GOS and from 12 to 24 grams of brewer's yeast, per calf a day. The continuous mixing was performed until the product made homogeneous was distributed immediately after mixing to animals.

The group D1 (control group) is fed with a conventional low-fat milk (50%)-based milk replacer. The continuous mixing was performed until the product made homogeneous was distributed immediately after mixing to animals.

### 5.5 RESULTS

| Investigated parameter | Yeast Group (group A) | GOS Group (group B) | WPS Group (group C) | Control Group (group D) |
|---|---|---|---|---|
| Average weight upon arrival | 40 kg | 40 kg | 38 kg | 40 kg |
| Average weight increase at the end of weaning | 45 kg | 44 kg | 48 kg | 40 kg |
| Percentage of animals with at least one dysentery episode | 75% | 50% | 15 % | 80% |
| Percentage of refusal of meal | 0,69% | 0,67% | 0,47% | 0,98% |
| Investigated parameter | Yeast Group (group A1) | GOS Group (group B1) | YEAST- GOS Group (group C1) | Control Group (group D1) |
| Average weight upon arrival | 37 kg | 37 kg | 39 kg | 37kg |
| Average weight increase at the end of weaning | 45 kg | 43 kg | 47 kg | 40 kg |
| Percentage of animals with at least one dysentery episode | 70% | 55% | 20 % | 80% |
| Percentage of refusal of meal | 0.70% | 0.69% | 0.50% | 0.98% |

### 6. Conclusions

### 6.1 Test results

As highlighted in tables a lower incidence of diarrheal phenomena, a better weight increase and a lower incidence of meal rejection are observed in group C (group WPS) and in group C1 (Yeast-GOS group), with respect to the animals of group D and D1 (control groups), to groups A and A1 (Brewer's yeast groups) and to groups B and B1 (GOS groups).

It is highlighted that groups A and A1 (Brewer's yeast groups) had better performances than groups D and D1 (control groups) as far as the weight increase and the lower incidence of diarrheal episodes are concerned. The groups B and B1 (GOS groups) highlighted better performances than groups D and D1 (control groups) and analogous performances with respect to groups A and A1 (Yeast groups).

The groups C and C1 (WPS and Yeast-GOS group) obtained better performances both as to weight increase, the percentage of diarrheal events and the percentage of meal rejection.

### 6.2 Discussion of the results

The performances of groups A and A1 (Brewer's yeast groups) were obtained even thanks to the content of vitamin B of brewer's yeast, which tends to contrast the effect of sugars existing in the milk replacer, so as to inhibit the beginning of dysentery. FOS and MOS existing in the brewer's yeast further prevent the harmful bacteria from anchoring to the cell surface through fimbria cells with specific mannose anchoring sites.

The performances of groups B and B1 (GOS groups) were obtained thanks to the presence of GOS, which promote the development of Bifido bacteria and of Lactobacilli, by inhibiting the development of the harmful bacteria by means of competitive exclusion mechanism and the production of volatile fatty acids, in particular butyric acid which creates an environment further disadvantageous for the development of the harmful bacteria; moreover the presence of butyric acid favours the intestinal villi development and crypt deepening.

In both above-mentioned groups the products were administered under the liquid form to guarantee purity and complete solubility of the product joined to the Milk Replacer.

### 6.3 Resulted critical issues

It is important to underline that for the final user (breeder) it is fundamental that the prebiotics can be easily found, stored and used. To this regard during the experimentation step problems linked to the use of liquid yeast were highlighted since it tends to separate and stratify inside the cans, consequently it results to be difficult to administer the correct dosage to the calves. An analogous problem occurred with the use of GOS, which cannot be kept for long time at room temperature as it is highly fermentable and it further tends to settle the calcium phosphate crystals, by making difficult the melting and the administration of an adequate dosage to the calves.

The greater incidence of meal rejection by groups A and A1 (Brewer's yeast groups), B and B1 (GOS group) is ascribable to the above-mentioned problems.

### 6.4 Peculiarity of the WPS product related use advantages

The drying, by means of spray dryer, of mixture of GOS, Yeast and WPC allows to meet the previously described problems, by obtaining a homogeneous raw material (WPS), which can be perfectly mixed inside a Milk Replacer and wholly soluble. WPS allows to have a finished product which does not require any additional integration thanks to the homogenization process of GOS, Brewer's yeast and WPC before atomization.

The best performances are justified by the synergic action of FOS and MOS which act against the negative bacteria and GOS which favours the growth of the intestinal microbiota. The Brewer's yeast, by supplying vitamins of group B and essential aminoacids, provides the ideal support for the growth of the intestinal microbiota. Moreover GOS are able to stimulate the proliferation of Bifido Bacterium Lactis and Lactobacillus Rhamnosus, in presence of dairy products, in particular WPC.

The same performance cannot be obtained by using the same prebiotics as additives for a conventional milk since the storage difficulty and the tendency to separation make more difficult to keep a correct proportion between additives and Milk replacer. Moreover the ration results to be less desirable as it is highlighted from the higher percentage of meal rejection.

Within the performed test the best method for preventing dysentery and for obtaining the best growth performances in bred calves is to administer food (Milk Replacer) including 15% of WPS to have the synergic effect given by 1.5% of GOS 2% of Brewer's yeast kept in constant percentage for the whole duration of weaning.

### 6.5 Peculiarity Yeast- GOS related use advantages

The drying, by means of spray dryer, of the mixture di GOS and Yeast allows to meet the previously described problems, by obtaining a homogeneous raw material (Yeast-GOS), which can be perfectly mixed and soluble even inside the low-fat-milk-based Milk replacers wherein for formulation and production reasons the inclusion of WPS is not possible. Yeast-GOS allows to have a finished product which does not require any additional integration thanks to the homogenization process of GOS and Brewer's yeast before atomization.

The obtained performances are analogous to those of WPS for the same reasons. They result to be slightly lower due to the smaller inclusion of GOS in the finished product; nevertheless in the experimentation the use of Yeast-GOS resulted to be the best system for including the prebiotics in the optimum dosage in a low-fat-milk-based Milk Replacer.

### 7. Discussion advantages of the process for preparing the WPS according to the present invention

Once analysed the need for using WPC, GOS, FOS and MOS in animal feeding according to research and experimental test, considering the higher effectiveness in using products in powder form with respect to those mixed in liquid form, one then decided to find the above-mentioned prebiotics directly in powder. Considering the possibility of atomizing products in liquid form by making them powder by means of the spray drying process the atomization of the single products was prepared.

The aim, considering the confirmed synergy and effectiveness of the three components, was to obtain powders of the same components to be additioned singularly to the production of the milk replacer. However, the spray drier has the following operating limits:

**table 1**

| **Feature** | **Acceptability limits** |
|---|---|
| pH | 5.8 - 6.5 |
| Content of lactic acid | Max 2% S.s. |
| Dry substance % | 50 - 60 |

GOS insted have the following chemical-physical features:

**table 2**

| **Feature** | **Found typical value** |
|---|---|
| pH | 3.8 |
| Lactic acid | 8% S.s. |
| Dry substance % | 40 - 45 |

Brewer's yeast including MOS and FOS instead has the following chemical-physical features:

**table 3**

| **Feature** | **Found typical value** |
|---|---|
| pH | 6.1 |
| Lactic acid | 0.5 % S.s. |
| Dry substance % | 10 - 11 |

As it it highlighted from the divergences between the required values (shown in table 1) and those found in the products to be atomized and transformed in powder (table 2 and 3) it was made necessary to find a raw material which could even intervene to stabilize the pH and reduce the content of lactic acid in the liquid mixture before spraying.

WPC (serum proteins) was identified as raw material which could be used with the wished aim of pH stabilization and lactic acid containment.

However, the so-obtained mixture did not result to be suitable to be entered as such in the atomization process for spray drying. It requests the pasteurization and the high content in simple sugars in both matrixes (lactose, galactose, glucose, dextrose) favours the adhesion of the product to the evaporator walls by causing encrustations on the tube bundles; this leads to a decrease in terms of product performance and quality considering the possible presence of caramelised/burnt sugars. Moreover the lactic acid values result to be still too high.

The synergy between serumproteins WPC and liquid brewer's yeast was analysed. A containment of the lactic acid value was highlighted. The lactic acid values result to be still too high. The mixture further requires the pasteurization and an additional raising in the dry substance to the optimum process values.

The mixing of GOS and of brewer's yeast leads to obtain a liquid mixture with chemical features suitable to spraying as it is highlighted from the shown table (table 4). However, the dry substance content results to be still too low for proceeding in an effective way with the atomization by spraying

**Table 4.**

| **Feature** | **Found typical value** |
|---|---|
| pH | 5.8 - 5.9 |
| Content of lactic acid | 1,5 % S.s. |
| Dry substance % | 20 - 22 |

Then, as optimum process for keeping unaltered the nutritional and chemical features of the process, a concentration for evaporation in controlled atmosphere with the application of a negative pressure was identified.

Thanks to this last process the product has the optimum features for a correct procedure of spraying according to the table shown below (table 5) wherein the found values are expressed which result to be within the limits defined in table 1.

**Table 5.**

| **Feature** | **Found typical value** |
|---|---|
| pH | 5.9 |
| Content of lactic acid | 1.5 % S.s. |
| Dry substance % | 50 |

### 7.2 RESULTS OBTAINED WITH THE PROCESS

Considering the initial impossibility of producing single raw materials of GOS, FOS and MOS to be used in mixing during the industrial process for producing a milk replacer with other existing ones, all synergies were implemented to make the product able to be worked within the end productive process by using the equilibrium between dairy products and yeasts which allowed to stabilize the GOS product, which in a first step resulted to be impossible to be worked as such. This led to implement a raw material identified with the name of WPS including GOS, MOS, FOS and serumproteins WPC.

WPS appears with the following chemical-physical features:

**Table 8 - ORGANOLECTIC FEATURES**

| **Feature** | **Found typical value** |
|---|---|
| Colour | Yellow-ochre |
| Aspect | Fluid powder |

**Table 9 - CHEMICAL FEATURES**

| **Feature** | **Found typical value** |
|---|---|
| Humidity | 4% |
| Proteins | 32 - 36% |
| Lipids | 0.5 - 2.0% |
| Ashes | 5 - 7% |
| pH (sol. 10%) | 5.9 - 6.3 |
| Lactic acid | 1.4% |
| Solubility | >95% |

## Claims

1. A composition for food use comprising galacto-oligosaccharides and brewer's yeast (*Saccharomyces cerevisiae*) containing Mannan-oligosaccharides and Fructooligosaccharides.

2. The composition according to claim 1 further comprising whey protein concentrate.

3. The composition according to claim 1 or 2 comprising from 5% to 15% by weight of galacto-oligosaccharides and from 10 to 20% by weight of brewer's yeast.

4. The composition according to claim 2 or 3 comprising from 70% to 80% by weight of whey protein concentrate.

5. The composition according to anyone of claims 1 to 4 further comprising one or more additives selected from stabilizers of pH, in particular 10% sodium hydroxide solution, emulsifiers or defoaming, in particular glycerin polyethyleneglycol ricinoleate E484.

6. The composition according to anyone of the preceding claims for use in the prevention or treatment of neonatal enteritis, in particular of calves.

7. The use of a composition according to anyone of claims 1 to 5 for animal nutrition, in particular as food supplements in place of milk.

8. The use according to claim 7 for animal nutrition in the weaning period.

9. The use according to claim 7 or 8 wherein said animals belong to one of the following species: calves, pigs, lambs, buffalo, dogs, cats, chickens.

10. The process for the preparation of a composition according to anyone of claims 2 a 5 comprising the following steps:
a) preparing a liquid mixture of galacto-oligosaccharides, whey protein concentrate and brewer's yeast containing Mannan-oligosaccharides and Fructooligosaccharides;
b) pasteurizing the mixture prepared in step a);
c) concentrating the mixture pasteurized in step b);
d) drying the concentrate of step c) by means of *spray drying.*

11. The process according to claim 10 wherein in step a) an alkalizing agent to bring the *pH* of the mixture between 6.10 and 6.50 and/or an antifoam in the concentration step and/or glycerine polyethylene glycol ricinolate are added to the mixture.

12. The process according to claim 10 or 11 wherein step of concentration c) is a step of concentration by evaporation in which a negative pressure is applied.

13. The process according to anyone of claims 8 to 12 wherein the product concentrated at step c) before drying is subjected to a step of filtration and/or homogenization.

14. The process according to claim 13 wherein said step of filtration includes a first filtration with 100 µm filters and a second filtration with 50 µm filters.

15. The process according to anyone of claims 8 to 14 whereby at the end of the concentration step b) the content of dry matter is at least double compared to the starting content.

## Patentansprüche

1. Zusammensetzung zur Nahrungsmittelverwendung mit Galactooligosacchariden und Brauereihefe (*Saccharomyces cerevisiae*) mit Mannan-Oligosacchariden und Fructooligosacchariden.

2. Zusammensetzung nach Anspruch 1, die weiterhin ein Molkenproteinkonzentrat umfasst.

3. Zusammensetzung nach Anspruch 1 oder 2, die von 5 bis 15 Gewichtsprozent Galactooligosaccaride und von 10 bis 20 Gewichtsprozent Brauereihefe umfasst.

4. Zusammensetzung nach Anspruch 2 oder 3, die von 70 bis 80 Gewichtsprozent Molkenproteinkonzentrat umfasst.

5. Zusammensetzung nach einem der Ansprüche 1 bis 4, die weiterhin ein oder mehrere Additive umfasst, welche ausgewählt sind aus pH-Wert-Stabilisatoren, insbesondere 10% Natriumhydroxidlösung, schaumverhindernden Emulgatoren, insbesondere Glycerinpolyethylenglycolrizinoleat E484.

6. Zusammensetzung nach einem der vorhergehenden Ansprüche zur Nutzung bei der Verhinderung oder Behandlung von Neugeborenenenteritis, speziell von Kälbern.

7. Verwendung einer Zusammensetzung nach einem der Ansprüche 1 bis 4 zur Tierernährung, insbesondere als Nahrungsersatzmittel für Milch.

8. Verwendung nach Anspruch 7 zur Tierernährung in der Abstillperiode.

9. Verwendung nach Anspruch 7 oder 8, wobei die Tiere zu einer der folgenden Spezies gehören: Kälber, Schweine, Lämmer, Büffel, Hunde, Katzen, Hühner.

10. Prozess zur Herstellung einer Zusammensetzung nach einem der Ansprüche 2 bis 4, der die folgenden Schritte umfasst:
a) Herstellen einer flüssigen Mischung von Galactooligosacchariden, Molkenproteinkonzentrat und Brauereihefe mit Mannan-Oligosacchariden und Fructooligosacchariden;
b) Pasteurisieren der in Schritt a) hergestellten Mischung;
c) Konzentrieren der in Schritt b) pasteurisierten Mischung;
d) Trocknen des Konzentrats aus Schritt c) mittels *Sprühtrocknen.*

11. Prozess nach Anspruch 10, wobei in Schritt a) ein alkalisierendes Mittel der Mischung zugefügt wird, um den pH-Wert der Mischung auf einen Wert zwischen 6,10 und 6,50 zu bringen, und/oder ein Schaumverhinderer in dem Schritt zum Konzentrieren und/oder ein Glycerinpolyethylenglycolrizinolat.

12. Prozess nach Anspruch 10 oder 11, wobei der Schritt zum Konzentrieren c) ein Schritt zum Konzentrieren durch Verdampfen ist, bei dem ein negativer Druck angewendet wird.

13. Prozess nach einem der Ansprüche 8 bis 12, wobei das in Schritt c) konzentrierte Produkt vor dem Trocknen einem Schritt zum Filtrieren und/oder Homogenisieren unterzogen wird.

14. Prozess nach Anspruch 13, wobei der Schritt zum Filtrieren eine erste Filtrierung mit 100-µm-Filtern und eine zweite Filtrierung mit 50-µm-Filtern enthält.

15. Prozess nach einem der Ansprüche 8 bis 14, wobei am Ende des Schritts zum Konzentrieren c) der Inhalt von Trockenmasse wenigstens doppelt so groß ist, wie der Inhalt zu Beginn.

## Revendications

1. Composition destinée à un usage alimentaire comprenant des galacto-oligosaccharides et de la levure de bière (*Saccharomyces cerevisiae*) contenant des mannane-oligosaccharides et des fructo-oligosaccharides.

2. Composition selon la revendication 1, comprenant en outre un concentré de protéine de blé.

3. Composition selon la revendication 1 ou 2, comprenant de 5 % à 15 % en poids de galacto-oligosaccharides et de 10 à 20 % en poids de levure de bière.

4. Composition selon la revendication 2 ou 3, comprenant de 70 % à 80 % en poids de concentré de protéine de blé.

5. Composition selon l'une quelconque des revendications 1 à 4, comprenant en outre un ou plusieurs additifs choisis parmi les stabilisateurs de pH, en particulier une solution d'hydroxyde de sodium à 10 %, des émulsifiants ou des agents anti-mousse, en particulier le ricinoléate de polyéthylène glycol de glycérine E484.

6. Composition selon l'une quelconque des revendications précédentes destinée à être utilisée dans la prévention ou le traitement de l'entérite néonatale, en particulier des veaux.

7. Utilisation d'une composition selon l'une quelconque des revendications 1 à 5 pour la nutrition animale, en particulier comme suppléments alimentaires à la place du lait.

8. Utilisation selon la revendication 7 pour la nutrition animale dans la période de sevrage.

9. Utilisation selon la revendication 7 ou 8, dans laquelle lesdits animaux font partie de l'une des espèces suivantes : veaux, porcs, agneaux, buffles, chiens, chats, poulets.

10. Procédé de préparation d'une composition selon l'une quelconque des revendications 2 à 5, comprenant les étapes suivantes :
a) préparation d'un mélange liquide de galacto-oligosaccharides, de concentré de protéine de blé, et de levure de bière contenant des mannane-oligosaccharides et des fructo-oligosaccharides ;
b) pasteurisation du mélange préparé à l'étape a) ;
c) concentration du mélange pasteurisé à l'étape b) ;
d) séchage du concentré de l'étape c) au moyen du séchage par pulvérisation.

11. Procédé selon la revendication 10, dans lequel, à l'étape a), un agent alcalinisant pour porter le pH du mélange entre 6,10 et 6,50 et/ou un agent anti-mousse lors de l'étape de concentration et/ou le ricinoléate de polyéthylène glycol de glycérine sont ajoutés au mélange.

12. Procédé selon la revendication 10 ou 11, dans lequel l'étape de concentration c) est une étape de concentration par évaporation dans laquelle une pression négative est appliquée.

13. Procédé selon l'une quelconque des revendications 8 à 12, dans lequel le produit concentré à l'étape c) avant séchage est soumis à une étape de filtration et/ou d'homogénéisation.

14. Procédé selon la revendication 13, dans lequel ladite étape de filtration comprend une première filtration avec des filtres à 100 µm et une seconde filtration avec des filtres à 50 µm.

15. Procédé selon l'une quelconque des revendications 8 à 14, moyennant quoi, à la fin de l'étape de concentration b), la teneur en matière sèche est au moins du double de la teneur de départ.
